# FASCICULE DE BREVET EUROPEEN

(11) **EP 0 825 046 B1**
(45) Date de publication et mention de la délivrance du brevet: **11.04.2001**
(21) Numéro de dépôt: 97401932.5
(22) Date de dépôt: 13.08.1997
(51) Int. Cl.: B60J 1/17, B60J 10/04

(54) **Nouvelle coulisse pour caisson de porte d'un véhicule automobile à vitre coulissante**
Neue Kulisse für den Kasten einer Motorfahrzeugtür mit Schiebefenster
New slot for the body of a motor vehicle door with sliding window

(30) Priorité: 22.08.1996 FR 9610361
(43) Date de publication de la demande: 25.02.1998
(73) Titulaire: BTR SEALING SYSTEMS FRANCE, 92000 Nanterre (FR)
(72) Inventeur: Hardy, Francis, 76520 Boos (FR)
(74) Mandataire: Jolly, Jean-Pierre

(56) Documents cités:
- EP-A- 0 175 386
- EP-A- 0 699 548
- DE-A- 2 103 344
- US-A- 5 524 388

## Description

La présente invention concerne une nouvelle coulisse pour caisson de porte d'un véhicule automobile à vitre coulissante.

On sait que l'on appelle "coulisses" des profilés extrudés à section en U, destinés à guider les vitres coulissantes des portières d'automobiles dans leurs mouvements de bas en haut et de haut en bas et à assurer l'étanchéité entre la vitre et la carrosserie. Dans ce but, des lèvres font saillie à partir d'au moins une des deux branches du U du profilé vers l'intérieur de celui-ci et s'appliquent contre la face externe ou les deux faces de la vitre.

On distingue les coulisses qui équipent l'encadrement de vitre et celles qui équipent le caisson des portières d'automobile. C'est à ce dernier type de coulisses que s'intéresse la présente invention.

Il en existe généralement deux types, à savoir :
- les coulisses armées par un feuillard métallique interne, qui ont une rigidité satisfaisante, favorable au guidage de la vitre, mais qui sont d'un poids excessif ;
- les coulisses souples, dépourvues d'armature, mais qui nécessitent un guidage ou maintien complémentaire de la vitre en partie basse de la porte.

Que la coulisse soit souple ou armée, son positionnement en fond de portière est toujours délicat et l'on risque de rencontrer des défauts sérieux d'alignement entre la coulisse de l'encadrement de vitre et la coulisse du caisson, avec pour conséquence des risques de coincement de la vitre et l'apparition de bruits d'air.

Pour remédier à cet inconvénient, on a proposé :
- de prévoir un élément saillant tel qu'une feuillure dans le caisson de porte, permettant la fixation par clipsage du bas de la coulisse, mais cette solution n'est pas toujours utilisable ;
- de rendre solidaire de la coulisse une patte de fixation en tôle, ou même un organe en tôle à section en U, pour une coulisse souple, qui permet de fixer la coulisse dans la partie interne du caisson de porte, mais l'ensemble est lourd et est lui-même difficile à positionner et à protéger de la corrosion ;
- l'adjonction d'une pièce supplémentaire en extrémité de coulisse, qui est fixée dans le caisson de porte par vissage ou clipsage sur des pattes de fixation, mais qui pose toujours un problème de positionnement.

On connaît par ailleurs, par U.S.-A-5 524 388, une coulisse de caisson de porte de véhicule automobile à vitre coulissante, comprenant une partie rigide à section en U, dans laquelle est logé un profilé en un matériau souple, qui reçoit et guide la vitre mobile. Ce profilé est toutefois un élément de forme complexe, indépendant de la partie rigide, dont il est rendu solidaire au montage à l'aide d'ailes déformables. Une telle coulisse implique donc une opération de montage complexe des utilisateurs ou des fabricants.

La présente invention vise à remédier à ces inconvénients, en renforçant une coulisse souple pour caisson de porte par moulage à l'extérieur de la coulisse d'un élément additionnel en une matière plastique rigide, qui épouse la forme externe de cette coulisse et lui confère ainsi une excellente rigidité, favorable au coulissement de la vitre, sans accroître son poids de façon excessive.

L'invention vise également à faciliter le positionnement d'une telle coulisse et sa fixation sur le panneau intérieur du caisson de porte, en équipant l'élément additionnel en matière plastique rigide d'une patte de fixation, venue de moulage avec celui-ci et éventuellement articulée sur lui, de manière à pouvoir s'escamoter par pivotement, parallèlement au fond de la coulisse ou à l'un de ses flancs, lors du positionnement de celle-ci dans le caisson de porte.

L'invention a, par conséquent, pour objet une coulisse pour caisson de porte d'un véhicule automobile à vitre coulissante, cette coulisse comprenant, d'une part, un profilé souple en une matière thermoplastique extrudée ou en caoutchouc, muni ou non d'une armature métallique et ayant une section transversale en forme de U, au moins une lèvre d'étanchéité faisant saillie à partir d'au moins une branche du U vers l'intérieur de celui-ci, d'autre part, suivant une partie au moins de la longueur du profilé souple, un élément de renfort en une matière rigide, cette coulisse étant caractérisée en ce que la matière rigide dont est constitué l'élément de renfort est une matière plastique, qui a été moulée sur une partie au moins de la surface externe de la base et des parois latérales du profilé souple, de manière que l'élément de renfort épouse la forme externe de ce profilé en vue de le rigidifier.

L'invention a également pour objet une coulisse pour caisson de ce type, comportant un patte rigide de fixation sur un panneau du caisson de porte, caractérisée en ce que ladite patte rigide de fixation est venue de moulage avec l'élément de renfort. De préférence, la patte de fixation est articulée sur l'élément de renfort par une charnière permettant de l'escamoter par pivotement, parallèlement à la base du U du profilé ou à l'une des branches du U, lors du positionnement de la coulisse dans le caisson de porte, pour l'amener ensuite en position de fixation sur ce caisson.

En vue de maintenir la patte de fixation en position escamotée parallèlement à la base du U du profilé ou de l'une des bandes du U, elle comportera avantageusement un ergot faisant sailie en direction du profilé et apte à venir se clipser en position escamotée de la patte dans un logement de profil complémentaire, ménagé en un emplacement correspondant du profilé.

Grâce à la patte de fixation pivotante dont est pourvu le support de coulisse, dans cette forme de réalisation, il est facile, lors du montage de la coulisse et de son support entre les feuillures du bandeau de porte, d'insérer entre celles-ci la coulisse et l'élément de renfort qui en est rigidement solidaire, avec la patte de fixation en position escamotée, cette patte étant ensuite amenée, par pivotement, dans une position appropriée à sa fixation à l'aide de vis sur un montant du caisson de porte.

Il est ainsi possible d'assurer de façon aisée un alignement parfait entre les extrémités correspondantes de la coulisse d'encadrement de vitre et la coulisse de caisson conforme à l'invention.

Une vis solidaire en rotation de la patte de fixation pourra avantageusement être prévue sur cette dernière pour la fixer sur le montant du caisson de portière. Cette vis pourra, par exemple, être articulée par un axe de rotation sur l'élément de renfort et être logée dans un évidement à section en U de la patte de fixation, dans lequel elle pourra librement coulisser, avec une extrémité filetée faisant saillie en dehors de la patte de fixation.

Afin de positionner aisément la coulisse par rapport à la porte, en vue de sa fixation, on pourra prévoir en position appropriée sur le panneau de porte ou sur un montant de celle-ci un ergot apte à venir s'engager dans un logement de la coulisse, dans la position désirée.

Du fait de l'élément de renfort dont elle est équipée, la coulisse de caisson est parfaitement rigide et assure ainsi un excellent glissement de la vitre à l'intérieur de la portière d'automobile.

Le poids et l'encombrement de la coulisse conforme à l'invention sont en outre réduits de façon appréciable par rapport aux coulisses de caisson de la technique antérieure.

Enfin, comme on le verra ci-après, l'élément de renfort peut comporter une partie évidée, apte à servir de logement à des faisceaux de câbles électriques, en remédiant ainsi aux problèmes bien connus de fixation de ces câbles.

La coulisse souple proprement dite pourra être réalisée en tout matériau usuel approprié, par exemple en un élastomère. L'élément de renfort moulé sur cette coulisse pourra être en toute matière plastique rigide, chargée où non, appropriée aux conditions d'utilisation, par exemple en polypropylène rigide. Cet élément de renfort sera moulé par injection à chaud sur la coulisse souple, sur une longueur de celle-ci, la patte de renfort et sa charnière d'articulation (zone rectiligne d'épaisseur réduite) étant bien entendu moulées simultanément.

L'invention va être décrite ci-après plus en détail, en référence aux dessins schématiques annexés, qui n'ont pas de caractère limitatif.
La figure 1 est un schéma d'une automobile illustrant les positions respectives des coulisses d'encadrement de vitre et de caisson sur des portières d'automobile à vitre coulissante ;
La figure 2 est une vue de l'arrière, perpendiculairement à sa base, d'une première forme de réalisation de la coulisse de caisson conforme à l'invention, avec la patte de fixation appliquée contre cette base (position de travail) ;
La figure 3 est une coupe suivant la ligne III-III de la figure 2 ;
La figure 4 est une coupe analogue à celle de la figure 3, illustrant la possibilité de pivotement de la patte de fixation par rapport à l'élément de renfort ;
La figure 5 est une vue analogue à celle de la figure 4, illustrant une seconde réalisation de l'invention ;
La figure 6 est une vue en perspective d'une autre variante de réalisation de la coulisse conforme à l'invention.

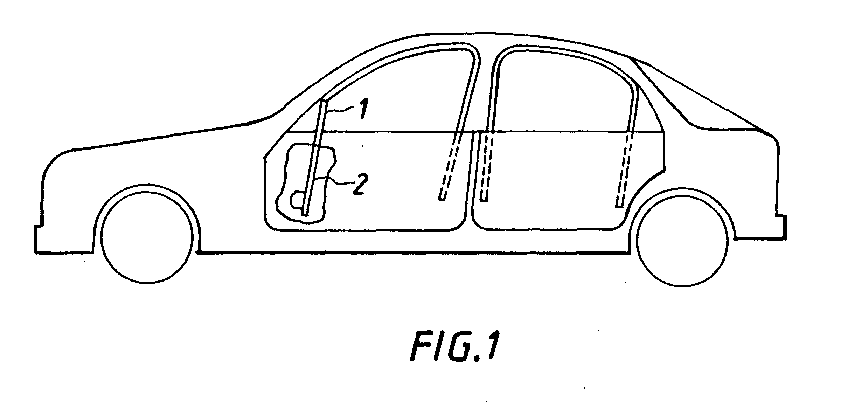

Sur la figure 1 sont illustrées schématiquement les positions des coulisses 1 d'encadrement de vitre coulissante des portes avant et arrière d'une automobile, ainsi que les coulisses 2 de caisson de ces mêmes portes.

Ainsi qu'il a été expliqué, les extrémités contiguës des coulisses 1 et 2 doivent être parfaitement alignées, pour ne pas gêner les mouvements de bas en haut et de haut en bas des vitres et, dans ce but, lorsque l'on fixe les coulisses 2 sur les caissons de porte, elles doivent être positionnées avec précision. Cette opération est délicate, car les coulisses 2 doivent être amenées en position dans le caisson assemblé et elles doivent en être rendues solidaires à l'aide de pièces auxiliaires telles que les organes auxiliaires de fixation en tôle évoqués ci-dessus.

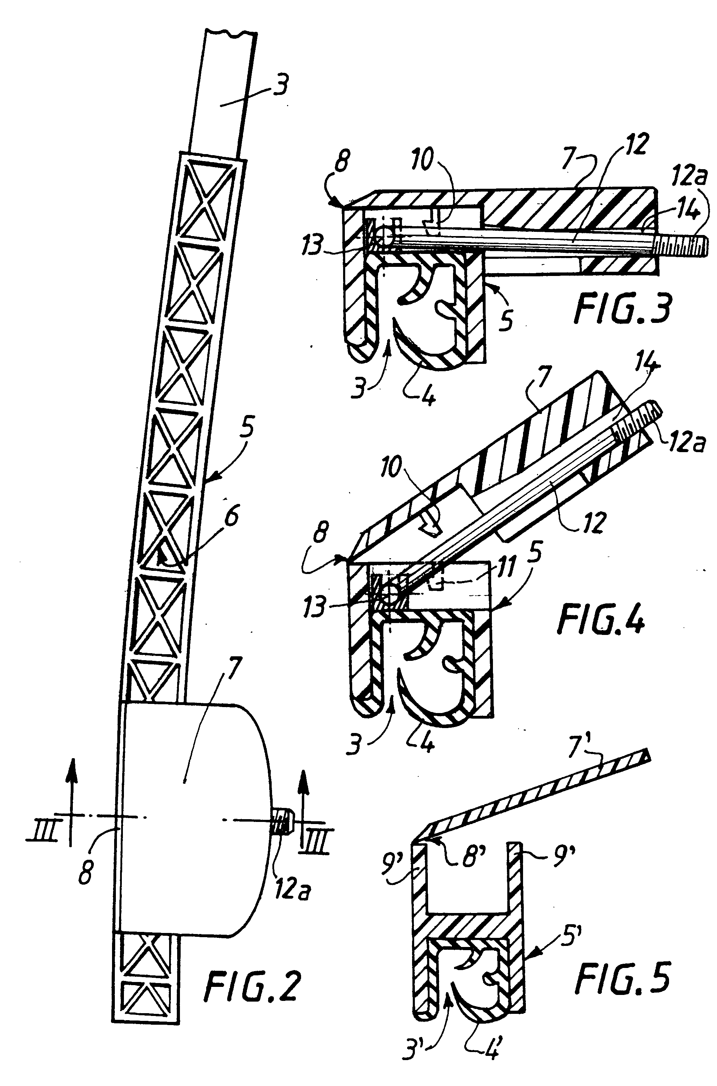

Pour faciliter cette opération, conformément à l'invention, on utilise une coulisse de caisson du type représenté, par exemple, sur les figures 2 à 4, ou sur la figure 5, dans laquelle, au profilé souple à section en U constituant la coulisse proprement dite est associé un élément de renfort, destiné à rigidifier la base et les parois latérales du profilé et sur lequel est articulée une patte de fixation.

Sur les figures 2 à 4, le profilé à section en U constituant la coulisse proprement dite est désigné par la référence 3. Il est en un matériau souple tel que le caoutchouc, est ici dépourvu d'une armature métallique et comporte, de façon connue, au moins une lèvre 4 attenante à la partie supérieure de l'une de ses parois latérales. Cette lèvre 4 fait saillie vers l'intérieur de la coulisse et est inclinée vers la base de celle-ci, en vue de lécher la face externe de la vitre coulissante et d'assurer son étanchéité.

Selon l'invention, le profilé 3 est gainé sur toute sa surface externe par un élément de renfort 5, en une matière plastique dure, surmoulée sur le profilé 3, dont l'élément 5 épouse la forme externe, en vue de le rigidifier aussi bien à sa base que sur ses parois latérales. Dans cette réalisation, l'élément de renfort a lui aussi un section transversale en U. Comme représenté sur le dessin, des nervures 6 sont de préférence ménagées sur les surfaces externes de cet élément 5, de manière à accroître sa rigidité.

Une patte de fixation 7, venue de moulage avec l'élément de renfort 5, est articulée sur celui-ci, à la base de l'une des parois latérales du profilé 3, par une charnière 8, simplement constituée par une partie rectiligne de moindre épaisseur de la patte 7.

Pour positionner la coulisse dans le caisson, avant de l'en rendre solidaire, on replie la patte 7, dans cette forme de réalisation, contre la face externe de la base de l'élément 5, de manière à l'escamoter partiellement. Pour maintenir la patte 7 dans cette position, pendant toutes les opérations de positionnement, la patte comportera avantageusement un ergot 10 faisant saillie en direction de l'élément de renfort 5, dans lequel sera prévu en position correspondante un logement 11, dans lequel l'ergot 10 viendra se clipser.

Lorsque la coulisse a été amenée dans la position désirée entre les feuillures du bandeau de porte, on fait pivoter la patte 7 de fixation, comme représenté sur la figure 4, pour l'amener contre le panneau de porte, sur lequel on la fixe ensuite à l'aide de vis. Des trous pour le passage des vis peuvent naturellement être ménagées dans la patte 7.

Dans une forme de réalisation préférée illustrée par les figures 2 à 4, la patte 7 comporte elle-même une vis de fixation 12, articulée par un axe de rotation 13 sur l'élément de renfort 5. Cette vis 12 est logée dans un évidement 14 à section en U de la patte 7, dans laquelle elle est montée coulissante, et son extrémité filetée 12a fait saillie à l'extérieur de la patte 7.

La forme de réalisation de la figure 5, sur laquelle les organes déjà décrits en relation avec les figures 2 à 4 sont désignés par les mêmes signes de référence, diffère de celle qui vient d'être décrite en ce que l'élément de renfort 5', qui épouse toujours la forme externe du profilé 3' à section en U, comporte deux parois rigides parallèles 9', qui prolongent celles qui gainent les parois latérales de la coulisse 3'. Entre ces parois 9' peuvent ainsi être logés des faisceaux de câbles électriques (non représentés), qui sont donc rendus aisément solidaires du caisson.

Dans cette réalisation, la patte 7' est articulée par une charnière 8' sur l'arête de l'une des parois 9' non contiguë à la coulisse 3'.

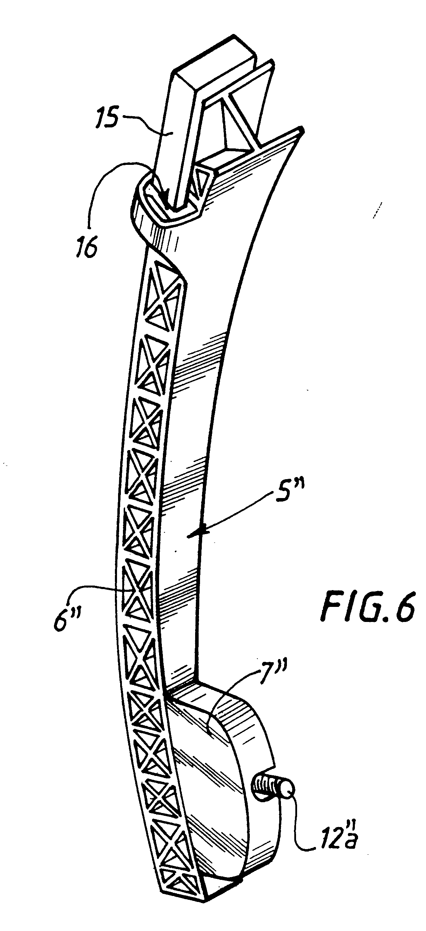

Enfin, dans la forme de réalisation de la figure 6, où les organes déjà décrits en référence aux figures 2 à 4 sont désignés par les mêmes chiffres de référence affectés de l'indice ", un ergot 15 est prévu sur le caisson de porte pour faciliter le positionnement de la coulisse en position de fixation sur ce caisson, un logement creux tel que 16 étant ménagé dans l'élément de renfort 5" pour recevoir l'ergot 15, lorsque la coulisse est en position appropriée.

Dans ces différentes réalisations, la coulisse conforme à l'invention est donc facile à fabriquer, aussi bien qu'à positionner avec précision et à fixer sur le caisson de porte d'automobile qu'elle doit équiper.

## Revendications

1. Coulisse pour caisson de porte d'un véhicule automobile à vitre coulissante, cette coulisse comprenant, d'une part, un profilé souple (3) en une matière thermoplastique extrudée ou en caoutchouc, munie ou non d'une armature métallique et ayant une section transversale en forme de U, au moins une lèvre d'étanchéité (4) faisant saillie à partir d'au moins une branche du U vers l'intérieur de celui-ci, d'autre part, suivant une partie au moins de la longueur du profilé souple (3), un élément de renfort (5) en une matière rigide, cette coulisse étant caractérisée en ce que la matière rigide dont est constitué l'élément de renfort (5) est en une matière plastique, qui a été moulée sur au moins une partie de la surface externe de la base et des parois latérales du profilé souple (3), de manière que l'élément de renfort (5) épouse la forme externe de ce profilé, en vue de le rigidifier.

2. Coulisse de caisson de porte selon la revendication 1, caractérisée en ce que la partie de l'élément de renfort (5, 5') qui gaine la coulisse souple (3, 3') a une section transversale en forme de U.

3. Coulisse de caisson de porte selon l'une des revendications 1 et 2, comportant une patte rigide de fixation sur un panneau du caisson de porte, caractérisée en ce que ladite patte rigide de fixation (7) est venue de moulage avec l'élément de renfort (5).

4. Coulisse de caisson de porte selon les revendications 2 et 3 en combinaison, caractérisée en ce que la patte rigide de fixation (7), venue de moulage avec l'élément de renfort (5), est articulée sur celui-ci par une charnière (8), permettant de l'escamoter par pivotement, parallèlement à la base du U du profilé ou à l'une des branches du U, lors du positionnement de la coulisse dans le caisson de porte, pour l'amener ensuite en position de fixation sur ce caisson.

5. Coulisse de caisson de porte selon la revendication 4, caractérisée en ce que la patte de fixation (7) comporte un ergot (10) faisant saillie en direction de l'élément de renfort (5) et apte à venir se clipser, en position escamotée de la patte (7) dans un logement (11) de profil complémentaire ménagé en position correspondante dans l'élément (5).

6. Coulisse selon l'une des revendications 4 et 5, caractérisée en ce que la patte (7) de fixation de l'élément de renfort (5) est articulée par la charnière (8) sur la base de la partie à section en U de l'élément de renfort (5).

7. Coulisse de caisson de porte selon l'une des revendication 1 à 5, caractérisée en ce que l'élément de renfort (5) comporte une partie évidée apte à servir de logement pour des faisceaux de câbles électriques.

8. Coulisse de caisson de porte selon les revendications 2 et 7 en combinaison, caractérisée en ce que la partie évidée apte à servir de logement pour des faisceaux de câble est limitée par la base de la partie à section en U de l'élément de renfort (5') et par des parois (9') prolongeant les branches du U de cet élément (5').

9. Coulisse de caisson de porte selon la revendication 8, caractérisée en ce que la patte (7') de fixation de l'élément de renfort (5') est articulée par la charnière (8') sur la tranche de l'une des parois (9') prolongeant les branches du U de l'élément (5').

10. Coulisse selon l'une des revendications 4 à 9, caractérisée en ce que la charnière (8, 8') est constituée par une zone rectiligne d'épaisseur réduite de l'élément de renfort (5, 5').

11. Coulisse de caisson de porte selon l'une des revendications 1 à 10, caractérisée en ce que l'élément de renfort (5, 5') comporte des nervures (6) de renfort sur une partie au moins de sa surface externe.

12. Coulisse de caisson de porte selon l'une des revendications 4 à 11, caractérisée en ce qu'une vis de fixation (12) est articulée par un axe de rotation (13) sur l'élément de renfort (5) et est monté coulissante dans un évidement (14) de la patte de fixation (7), une extrémité filetée (12a) de cette vis (12) faisant saillie en dehors de cette patte de fixation (7).

13. Coulisse de caisson de porte selon l'une des revendications 1 à 12, caractérisée en ce qu'elle comporte un logement (16) dans lequel peut être engagé un ergot (15) prévu sur le caisson de porte pour amener la coulisse en position de fixation sur ce caisson.

## Patentansprüche

1. Schiebeführung für den Kasten einer Kraftfahrzeugtür mit Schiebefenster, die einerseits ein flexibles Profilteil (3) aus extrudiertem thermoplastischen Werkstoff oder aus Kautschuk, das wahlweise mit einer metallischen Bewehrung versehen ist sowie einen U-förmigen Querschnitt und wenigstens eine Dichtlippe (4) aufweist, die von wenigstens einem Schenkel des U nach innen ragt, andererseits auf wenigstens einem Längenabschnitt des flexiblen Profilteils (3) ein Verstärkungselement (5) aus einem starren Werkstoff aufweist, dadurch gekennzeichnet, daß der das Verstärkungselement (5) bildende starre Werkstoff ein Kunststoff ist, der an wenigstens einen Abschnitt der Außenfläche des Bodens und der Seitenwände des flexiblen Profilteils (3) in der Weise angeformt ist, daß sich das Verstärkungselement (5) an die Außenform dieses Profilteils anschmiegt, um dieses zu versteifen.

2. Schiebeführung für einen Türkasten nach Anspruch 1, dadurch gekennzeichnet, daß der Abschnitt des Verstärkungselementes (5, 5'), der die flexible Schiebeführung (3, 3') umgibt, einen U-förmigen Querschnitt aufweist.

3. Schiebeführung für einen Türkasten nach einem der Ansprüche 1 und 2, die einen starren Lappen zur Befestigung an einem Paneel des Türkastens aufweist, dadurch gekennzeichnet, daß der starre Befestigungslappen (7) einstückig mit dem Verstärkungselement (5) geformt ist.

4. Schiebeführung für einen Türkasten nach Anspruch 2 in Verbindung mit Anspruch 3, dadurch gekennzeichnet, daß der mit dem Verstärkungselement (5) einstückig geformte starre Befestigungslappen (7) mit jenem durch ein Scharnier (8) gelenkig verbunden ist, das es ermöglicht, daß er beim Positionieren der Schiebeführung im Türkasten parallel zum Boden oder zu einem der Schenkel des U des Profilteils in Freistellung geschwenkt wird, um ihn dann in die Stellung zur Befestigung an dem Kasten umzulegen.

5. Schiebeführung für einen Türkasten nach Anspruch 4, dadurch gekennzeichnet, daß der Befestigungslappen (7) einen Ansatz (10) aufweist, der in Richtung zum Verstärkungselement (5) herausragt und in der Freistellung des Lappens (7) in eine Aufnahme (11) des komplementären Profils einrastbar ist, die an entsprechender Stelle im Element (5) ausgebildet ist.

6. Schiebeführung nach einem der Ansprüche 4 und 5, dadurch gekennzeichnet, daß der Befestigungslappen (7) des Verstärkungselementes (5) durch das Scharnier (8) am Boden des Abschnittes mit U-förmigem Querschnitt des Verstärkungselementes (5) angelenkt ist.

7. Schiebeführung für einen Türkasten nach einem der Ansprüche 1 bis 5, dadurch gekennzeichnet, daß das Verstärkungselement (5) eine Ausnehmung aufweist, die als Aufnahme für Bündel elektrischer Kabel benutzbar ist.

8. Schiebeführung für einen Türkasten nach Anspruch 2 in Verbindung mit Anspruch 7, dadurch gekennzeichnet, daß die als Aufnahme für Kabelbündel benutzbare Ausnehmung durch den Boden des Abschnitts von U-förmigem Querschnitt des Verstärkungselementes (5') und durch die Schenkel des U dieses Elementes (5') verlängernde Wände (9') begrenzt ist.

9. Schiebeführung für einen Türkasten nach Anspruch 8, dadurch gekennzeichnet, daß der Befestigungslappen (7') des Verstärkungselementes (5') durch das Scharnier (8) an der Kante einer der Wände (9') angelenkt ist, die die Schenkel des U des Elements (5') verlängern.

10. Schiebeführung nach einem der Ansprüche 4 bis 9, dadurch gekennzeichnet, daß das Scharnier (8, 8') durch einen geradlinigen Bereich von verkleinerter Dicke des Verstärkungselements (5, 5') gebildet ist.

11. Schiebeführung für einen Türkasten nach einem der Ansprüche 1 bis 10, dadurch gekennzeichnet, daß das Verstärkungselement (5, 5') auf einem Abschnitt wenigstens seiner Außenfläche Verstärkungsrippen (6) aufweist.

12. Schiebeführung für einen Türkasten nach einem der Ansprüche 4 bis 11, dadurch gekennzeichnet, daß eine Befestigungsschraube (12) durch eine Schwenkachse (13) mit dem Verstärkungselement (5) gelenkig verbunden und in einer Aussparung (14) des Befestigungslappens (7) verschiebbar angeordnet ist, wobei ein Gewindeende (12a) der Schraube (12) aus dem Befestigungslappen (7) herausragt.

13. Schiebeführung für einen Türkasten nach einem der Ansprüche 1 bis 12, dadurch gekennzeichnet, daß sie eine Aufnahme (16) aufweist, in der ein am Türkasten vorgesehener Ansatz (15) angeordnet werden kann, um die Schiebeführung in eine Stellung zur Befestigung an diesem Kasten zu verbringen.

## Claims

1. A runner for an automotive door body with sliding window, said runner on the one hand comprising a flexible profile (3) of extruded thermoplastics or of rubber, which may or may not be provided with a metallic reinforcement and has a U-shaped cross section, at least one sealing lip (4) projecting from at least one branch of the U towards the inside thereof, and on the other hand comprising a reinforcing element (5) of a rigid material along part at least of the length of the flexible profile (3), said runner being characterised in that the rigid material of which the reinforcing element (5) consists is a plastics material, which has been moulded onto at least part of the outer surface of the base and lateral walls of the flexible profile (3), in such a way that the reinforcing element (5) matches the outer shape of said profile, with a view to stiffening it.

2. A door body runner according to claim 1, characterised in that the part of the reinforcing element (5, 5') which sheathes the flexible runner (3, 3') has a U-shaped cross section.

3. A door body runner according to one of claims 1 and 2, comprising a rigid tab for fastening to a door body panel, characterised in that said rigid fastening tab (7) is moulded together with the reinforcing element (5).

4. A door body runner according to claims 2 and 3 combined, characterised in that the rigid fastening tab (7), moulded together with the reinforcing element (5), is articulated thereto by a hinge (8), allowing it to be retracted by pivoting, parallel to the base of the U constituting the profile or one of the branches of the U, during positioning of the runner in the door body, to bring it subsequently into a fastening position on said body.

5. A door body runner according to claim 4, characterised in that the fastening tab (7) comprises a lug (10) projecting in the direction of the reinforcing element (5) and capable of being clipped, when the tab (7) is in the retracted position, in a receptacle (11) of complementary profile formed in a corresponding location in the element (5).

6. A runner according to one of claims 4 and 5, characterised in that the fastening tab (7) of the reinforcing element (5) is articulated by the hinge (8) to the base of the U-section part of the reinforcing element (5).

7. A door body runner according to one of claims 1 to 5, characterised in that the reinforcing element (5) comprises a hollowed part capable of serving as a receptacle for bundles of electric cables.

8. A door body runner according to claims 2 and 7 combined, characterised in that the hollowed part capable of serving as a receptacle for bundles of cables is defined by the base of the U-section part of-the reinforcing element (5') and by walls (9') extending the branches of the U of said element (5').

9. A door body runner according to claim 8, characterised in that the fastening tab (7') of the reinforcing element (5') is articulated by the hinge (8') to the portion of one of the walls (9') extending the branches of the U of the element (5').

10. A runner according to one of claims 4 to 9, characterised in that the hinge (8, 8') consists of a reduced thickness rectilinear zone of the reinforcing element (5, 5').

11. A door body runner according to one of claims 1 to 10, characterised in that the reinforcing element (5, 5') comprises reinforcing ribs (6) on one part at least of the outer surface thereof.

12. A door body runner according to one of claims 4 to 11, characterised in that a fastening screw (12) is articulated via an axis of rotation (13) to the reinforcing element (5) and is mounted slidingly in a recess (14) in the fastening tab (7), one threaded end (12a) of this screw (12) projecting out of said fastening tab (7).

13. A door body runner according to one of claims 1 to 12, characterised in that it comprises a receptacle (16), in which there may engage a lug (15) provided on the door body to bring the runner into the fastened position on said body.
